# EUROPEAN PATENT APPLICATION

(11) **EP 4 428 215 A1**
(43) Date of publication of application: **11.09.2024**
(21) Application number: 23160957.9
(22) Date of filing: 09.03.2023
(51) Int. Cl.: C10G 31/10, B04B 11/04, B04B 13/00, C10G 31/06, C10G 33/08, B01D 17/02, B01D 17/12

(54) **METHOD FOR OPERATING A SYSTEM COMPRISING A CENTRIFUGAL SEPARATOR**

(71) Applicant: Alfa Laval Corporate AB, 221 00 Lund (SE)
(72) Inventor: EKETORP, Erik, SE-178 34 EKERÖ (SE)
(74) Representative: Alfa Laval Attorneys

(57) **Abstract**

The present invention provides a method (100) for operating a system (1) comprising a centrifugal separator (2) for separating at least one liquid phase and a sludge phase from a liquid feed mixture. The method (100) is comprising alternating between a first and second mode of operation. The first mode of operation comprises the steps of a) supplying (101) said liquid feed mixture to be cleaned to said centrifugal separator (2), said liquid feed mixture having a first temperature; and b) discharging (102) at least one separated liquid phase from the centrifugal separator (2). The second mode of operation comprises the steps of c) stopping (103) said supply of liquid feed mixture to the centrifugal separator (2); and d) decreasing (104) the temperature of the liquid feed mixture to a second temperature and/or decreasing (105) the flow rate of the liquid feed mixture. The present invention further provides a system (1) for separating at least one liquid phase and a sludge phase from a liquid feed mixture.

## Description

### Field of the Invention

The present invention relates to the field of centrifugal separators, such as centrifugal separators for cleaning fuel oil on board a ship, and more specifically to reducing the power consumption of a system comprising a centrifugal separator.

### Background of the Invention

Centrifugal separators are generally used for separation of liquids and/or solids from a liquid mixture or a gas mixture. During operation, fluid mixture that is about to be separated is introduced into a rotating bowl and due to the centrifugal forces, heavy particles or denser liquid, such as water, accumulates at the periphery of the rotating bowl whereas less dense liquid accumulates closer to the central axis of rotation. This allows for collection of the separated fractions, e.g. by means of different outlets arranged at the periphery and close to the rotational axis, respectively.

Fuels supplied to ships is usually treated on board before use in the engine in order to remove solid contaminants, such as particles of silicon and aluminium compounds (e.g. microporous aluminium silicates or aluminosilicates known as zeolites), called catalyst fines, and liquid contaminants such as water. Marine diesel engines usually accept several types of commercially available fuel oils as long as they are adequately treated on board the ship. Further, also lubricating oils for an engine may contain a portion of solid and liquid impurities, such as water, which need to be separated before use.

Separating fuel and lubricating oils are very energy intensive applications. As an example, when separating HFO (Heavy Fuel Oil) that is to be used as a fuel onboard a ship, the oil is usually heated from 50 °C to 98 °C. To run a common separator size that has a capacity of ~5m3/h the needed energy to heat the feed is ~130kW.

There is thus a need in the art for improved separation protocols in order to decrease the overall energy consumption of a separation system.

### Summary of the Invention

A main object of the present invention is to provide a system and method for decreasing the overall energy consumption of a separation process, such as the separation of a fuel oil or lubricating oil onboard a ship.

As a first aspect of the invention, there is provided a method for operating a system comprising a centrifugal separator for separating at least one liquid phase and a sludge phase from a liquid feed mixture, said method comprising alternating between a first and second mode of operation, wherein said first mode of operation comprises the steps of
a) supplying said liquid feed mixture to be cleaned to said centrifugal separator, said liquid feed mixture having a first temperature;
b) discharging at least one separated liquid phase from the centrifugal separator; and said second mode of operation comprises the steps of
c) stopping said supply of liquid feed mixture to the centrifugal separator; and
d) decreasing the temperature of the liquid feed mixture to a second temperature
and/or decreasing the flow rate of the liquid feed mixture.

The system may comprise a centrifugal separator and relevant equipment for affecting a process parameter of the liquid feed mixture that is to be separated, such as the flow rate and temperature of the liquid feed mixture.

The method comprises two different modes of operation, i.e. the first mode of operation in which at least steps a) and b) are performed, and a second mode of operation during which at least steps c) and d) are performed.

The method comprises alternating between the first and second mode in a cyclic manner, i.e. performing the first mode, then the second mode and then the first mode again, etc. Thus, steps a) and a) may be performed after steps c) and d) in a further cycle of performing all steps a)- d). the second mode may thus be performed right after the first mode and vice versa.

However, the two modes may be performed for different periods of time. As an example, the first mode, in which liquid feed mixture is supplied to and separated in the centrifugal separator, may be performed during a major portion of the time, whereas the second mode is performed during intermittent time periods, such as during short breaks during the operation in the first mode.

The centrifugal separator is for separating at least one liquid phase and a sludge phase from a liquid feed mixture. The centrifugal separator may thus be arranged for separating the liquid feed mixture into a single liquid phase and a sludge phase, or into two liquid phases and a sludge phase. The centrifugal separator may comprise a stationary frame and a drive member configured to rotate a centrifuge bowl within the frame. The centrifuge bowl is enclosing the separation space. The separation space may comprise a stack of separation discs arranged centrally around the axis of rotation. Such separation discs form surface enlarging inserts in the separation space. The separation discs may have the form of a truncated cone, i.e. the stack may be a stack of frustoconical separation discs.

Thus, step a) of supplying the liquid feed mixture to be cleaned to the centrifugal separator may comprise supplying the liquid feed mixture to the separation space of the centrifugal separator, such as via an inlet pipe leading to the separation space, from e.g. a tank for storing the liquid feed mixture. The liquid feed mixture has during step a) a first temperature. This first temperature may be above room temperature, such as above 50 °C, such as above 90 °C.

Step b) of discharging at least one separated liquid phase may be continuously discharging at least one separated liquid phase, such as continuously discharging a first separated liquid phase only or continuously discharging a first and a second separated liquid phase.

During the second mode of operation, step c) is performed, i.e. the supply of liquid feed mixture to the centrifugal separator is stopped. However, the liquid feed mixture to be separated may still flow to other parts of the system, such as being recirculated to the tank from which is supplied to the centrifugal separator. Thus, during step c), the liquid feed mixture may still have a flow ate that is larger than zero.

Further during the second mode, during step d), the temperature of the liquid feed mixture is decreased to a second temperature that is lower than the first temperature or the flow rate of the liquid feed mixture is decrease, or as an alternative both these measures are performed, i.e. the temperature of the liquid feed mixture is decreased to a second temperature that is lower than the first temperature and the flow rate of the liquid feed mixture is decreased.

Step d) is performed during step c) i.e. during the time which the liquid feed mixture is not supplied to and hence does not enter the centrifugal separator.

The first aspect of the invention is based on the insight that power saving measures may be performed to the liquid feed mixture to be separated during the second mode of operation, i.e. during a time of the whole process when there is no actual separation performed in the separator. This may be e.g. during standstill of the centrifugal separator or during discharge of sludge phase. It has been found that such power saving measures still allows for a good process and separation when the first mode of operation continues after the second mode of operation. This has been found to be an advantage during the separation of marine fuel oils, where the feed of oil to be separated is switched off or directed away from the separator during discharge of separated sludge. Such a discharge sequence may take about 60 - 200 s, such as between 90 -150 s, during which the feed of oil to be separated previously has been running in recirculation and still been heated to 98 °C. The inventor has found that e.g. decreasing the heating during such discharge sequence (second mode of operation) still allows for good separation performance when the feed is yet again directed to the separator (first mode of operation).

Consequently, in embodiments of the first aspect of the invention, the second mode of operation further comprises the step
e) discharging a separated sludge phase from the centrifugal separator.

Consequently, the second mode of operation may comprise an actual discharge sequence. Such discharge sequence, i.e. a second mode of operation, may be less than 3 minutes and may be performed less than 5 times, such as less than 3 times, per hour during normal separation of e.g. marine fuel oil.

Step e) may further comprise supplying displacement liquid into the centrifugal separator. As known in the art, so-called displacement liquid, such as water, is normally supplied to the centrifuge bowl just before each discharge of sludge. The purpose of a supply of displacement liquid is to decrease the amount of separated liquid phase in the separation space so that no such separated liquid phase leaves the separation space through any sludge outlets during discharge. As an example, if the heavier of the liquids to be separated from the liquid feed mixture is water, water is normally used as the displacement liquid.

However, the centrifugal separator may during the second mode of operation also be left in standby mode. Such standby mode may comprise a lowering of the rotational speed of the centrifugal separator, e.g. before it goes to stop. As an example, the centrifugal separator can be in standby for 10 minutes before it goes to stop. Thus, decreasing the temperature of the feed down to the second temperature of decreasing the flow rate of the liquid feed mixture, i.e. step d) may also be performed during standby of the centrifugal separator to save energy.

In embodiments of the first aspect, the method is a method for on-board processing of the fuel oil, i.e. a method that is used on-board a ship.

In embodiments of the first aspect, step a) comprises supplying said liquid feed mixture from a tank and step c) further comprises recirculating said liquid feed mixture to said tank. Thus, the second mode of operation may comprise recirculation of the liquid feed mixture.

However, the second mode of operation may also comprise actually stopping the flow of the liquid feed mixture.

In embodiments of the first aspect, step a) comprises heating said liquid feed mixture to said first temperature using a heating device.

The heating device may be an electrical heater. However, the heating device may further be a steam/hot water/thermal oil heat exchangers. The first temperature may be above room temperature, such as above 50 °C, such as above 90 °C.

Step d) may comprise decreasing the temperature at least 10 °C, such as at least 20 °C, such as at least 30 °C, such as at least 40 °C.

Step d) of decreasing the temperature of the liquid feed mixture to a second temperature may be decreasing the setpoint temperature of the heating device to said second temperature. Thus, the actual measured temperature of the liquid feed mixture during step d) may be higher than the second temperature. Setting a lower setpoint temperature of the heating device thus saves energy.

As an example, step d) may comprise turning the heating device off.

In embodiments of the first aspect, step a) comprises supplying said liquid feed mixture using a liquid feed pump.

In order to decrease the flow rate of the liquid feed mixture during step d), the setpoint flowrate of such feed pump may be decreased.

As an example, step d) may comprise turning said liquid feed pump off.

In embodiments of the first aspect, the liquid feed mixture is oil and said first temperature in step a) is at least 50 °C.

The separation temperature is often determined depending on the viscosity of the oil. The lower the viscosity of the oil when treated in the separator, the higher the separation efficiency.

The oil may be a lubricant oil or a fuel oil, such as fuel oil for a diesel engine.

The term "fuel oil for a diesel engine" refers herein to oil intended for use in an engine for the generation of power, such as in an engine on board a ship or in a power plant. The term "fuel oil" may be as defined in ISO 8217, Petroleum products - Fuels (class F) - Specification of marine fuels, editions 2005 and 2012, or an oil component/phase originating from the pre-treatment of such an oil before use in an engine on board a ship or in a power plant. Diesel is regarded as a fuel oil herein. The fuel oil may thus be marine (residual) fuel oil (MFO) or Bunker C oil.

The "fuel oil for a diesel engine" may be composed of different types of fuel oils having different viscosities, generally stored in a tank, which means that the type of fuel oil that is sent to the separator for cleaning may differ in time.

As an example, the fuel oil for a diesel engine comprises heavy fuel oil (HFO). HFO is a residue oil from distillation or from cracking in mineral oil processing.

Step a) may thus comprise cleaning the fuel oil in the centrifugal separator to provide a clean oil phase and optionally a sludge phase and an aqueous phase. The sludge phase may comprise solid impurities, such as catalyst fines (cat fines). Catalyst fines are residues from the refining process of crude oil known as catalytic cracking, wherein long hydrocarbon molecules are cracked into shorter molecules.

As an example, the liquid feed mixture may be fuel oil and the first temperature in step a) may be at least 50 °C, such as at least 70 °C, such as at least 95 °C, such as about 98 °C.

Moreover, when the liquid feed mixture is oil and said first temperature in step a) is at least 50 °C, step d) may comprise decreasing the temperature of the oil to a second temperature that is at least 10 °C lower than said first temperature.

As an example, the liquid feed mixture may be fuel oil for a diesel engine, and said first temperature is at least 97 °C, and wherein step d) comprises decreasing the oil to a temperature that is lower than 80 °C, such as lower than 70 °C.

Consequently, in embodiments of the first aspect, there is provided a method for operating a system comprising a centrifugal separator for separating a clean oil phase and a sludge phase from fuel oil, said method comprising alternating between a first and second mode of operation, wherein said first mode of operation comprises the steps of
a) supplying said fuel oil to be cleaned to said centrifugal separator, said fuel oil having a first temperature of at least 95 °C;
b) discharging at least a clean oil phase from the centrifugal separator;
   and said second mode of operation comprises the steps of
c) stopping said supply of fuel oil to the centrifugal separator; and
d) decreasing the temperature of the fuel oil to a second temperature of less than 70 °C and/or decreasing the flow rate of the fuel oil.

As also mentioned above, the liquid feed mixture may be lubricant oil. The lubricant oil may be lubricant oil for an engine, such as a diesel engine. In embodiments of the first aspect, the method is a method for on-board processing of lubricant oil, i.e. a method that is used on-board a ship.

The separation temperature of the lubricant oil is often above 70 °C, such as at least 95 °C. Separated lubricant oil is then directed to an oil tank, such as the oil tank or oil sump located under the engine, from which it is supplied to the engine. However, when the lubricant oil is supplied to the engine, it is often cooled to about 55 °C. Consequently, if applying the method of the present invention, in which the lubricant oil does not need to be fully heated during the second mode of operation and instead be circulated back to the oil tank, the oil in the oil tank would have a lower temperature and hence, less energy would be required to cool it down to the temperature needed during supply to the engine.

Consequently, in embodiments of the first aspect, there is provided a method for operating a system comprising a centrifugal separator for separating a clean oil phase and a sludge phase from lubricant oil, said method comprising alternating between a first and second mode of operation, wherein said first mode of operation comprises the steps of
a) supplying said lubricant oil to be cleaned to said centrifugal separator, said lubricant oil having a first temperature of at least 95 °C;
b) discharging at least a clean oil phase from the centrifugal separator;
   and said second mode of operation comprises the steps of
c) stopping said supply of lubricant oil to the centrifugal separator; and
d) decreasing the temperature of the lubricant oil to a second temperature of less than 70 °C and/or decreasing the flow rate of the lubricant oil.

As a second aspect of the invention, there is provided a system for separating at least one liquid phase and a sludge phase from a liquid feed mixture, said system comprising
- a centrifugal separator arranged for separating at least one liquid phase and a sludge phase from said liquid feed mixture, and further arranged for continuously discharging said at least one separated liquid phase and intermittently discharging said sludge phase,
- a liquid feed pump for supplying said liquid feed mixture to said centrifugal separator,
- a heating device for heating said liquid feed mixture, and
- a control device configured for regulating the supply of liquid feed mixture to said centrifugal separator via said liquid feed pump and/or for regulating the temperature of said liquid feed mixture using said heating device, and further configured for initiating discharge of said sludge phase from said centrifugal separator; and further
wherein said control device is configured for alternating between said first and second modes of operation according to the first aspect of the invention discussed herein above.

The terms and definitions used in relation to the second aspect are the same as discussed in relation to the first aspect above.

The centrifugal separator may thus be as discussed in relation to the first aspect above. The centrifugal separator may be arranged for separating two liquid phases and a sludge phase from the liquid feed mixture. The two liquid phases may be discharged continuously, or one may be discharged continuously and one intermittently, e.g. by means of a valve arranged downstream an liquid outlet of the centrifugal separator.

The liquid feed pump may be arranged upstream of the heating device and thus upstream of the centrifugal separator.

The heating device may be an electrical heater. However, the heating device may further be a steam/hot water/thermal oil heat exchangers.

The control device is configured to regulate the supply of liquid feed mixture and or the temperature of liquid feed mixture to be cleaned. Thus, the control device may comprise a processor and an input/output interface for communicating with the liquid feed pump and/or the heating device. Consequently, the control device may comprise any suitable type of programmable logical circuit, processor circuit, or microcomputer, e.g. a circuit for digital signal processing (digital signal processor, DSP), a Central Processing Unit (CPU), a processing unit, a processing circuit, a processor, an Application Specific Integrated Circuit (ASIC), a FPGA (Field programmable gate array), a microprocessor, or other processing logic that may interpret and execute instructions.

The control device may be the same control device used for regulating and controlling the parameters of the centrifugal separator, such as the rotational speed of the centrifugal separator. Thus, the same software used for controlling the centrifugal separator may be used for controlling the liquid feed pump and/or the heating device.

In embodiments of the second aspect, the control device is configured for performing steps a), c) and d) of the method according to the first aspect above.

Moreover, the control device may be further configured for initiating step e) of discharging a separated sludge phase from the centrifugal separator.

The control device may thus be arranged for initiating the intermittent discharge sequence of the centrifugal separator. For that, the control device may be configured for sending instructions to an operating water module (OWM), which is used in the art for supplying an amount of water to the intermittent discharge system of the centrifugal separator to intermittently open sludge outlets of the centrifugal separator.

In embodiments of the second aspect, the system is further comprising a tank for storing said liquid feed mixture to be separated. The liquid feed pump may then be arranged for supplying said liquid feed mixture to said centrifugal separator from said tank.

Hence, the system may further comprise a bunker tank or the like for storing the liquid feed mixture to be cleaned before it is being supplied to the centrifugal separator.

Furthermore, the system may comprise a valve member arranged upstream of the centrifugal separator and arranged for directing the supply of the liquid feed mixture to the centrifugal separator during the first mode of operation and directing the supply of the liquid feed mixture back to said tank during the second mode of operation.

Consequently, a valve member, such as a three-way valve, may be used for alternating between directing the liquid feed mixture to the centrifugal separator and back to the tank during recirculation. The control device may be configured for controlling such valve member, i.e. be configured for sending instructions to the valve member to switch between sending the liquid feed mixture to the centrifugal separator and back to the tank.

As a third aspect of the invention, there is provide a computer program comprising instructions to cause the control device to execute the steps a), c) and d) of the method of the first aspect above. As an example, the computer program may comprise instructions to cause the control device to execute the steps a), c), d) and e) of the method of the first aspect above.

Further, the computer program may comprise instructions to cause the control device to also execute step b) of the method of the first aspect above. Thus, the instructions may for example be instructions to open a valve arranged downstream an outlet for a separated liquid phase such that the separated liquid phase may be discharged from the centrifugal separator.

As a fourth aspect of the invention, there is provided a computer-readable medium having stored thereon the computer program of the third aspect of the invention.

### Brief description of the Drawings

Figure 1 shows a schematic drawing of an embodiment of a system of the present invention during the first mode of operation.
Figure 2 shows a schematic drawing of an embodiment of a system of the present invention during the second mode of operation.
Figure 3 shows a schematic drawing of a centrifugal separator of the system.
Figure 4 schematically illustrates a method of operating a system according to the present invention.

### Detailed Description

The method and the system according to the present disclosure will be further illustrated by the following description with reference to the accompanying drawings. The examples are describing a system for cleaning fuel oil for a diesel engine and a method for operating such a system, but these teachings may of course be used in other applications, i.e. when using other types of liquid feed mixtures.

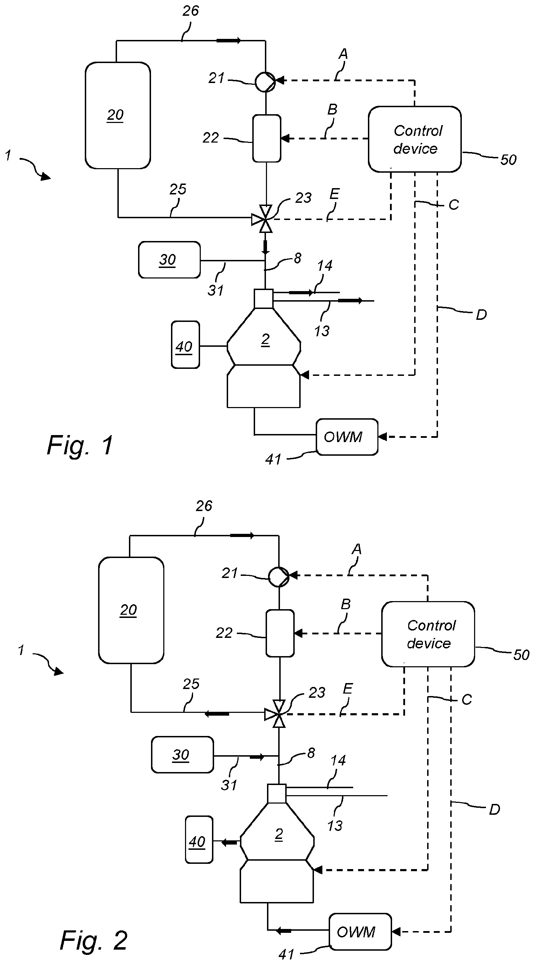

Fig. 1 shows a schematic drawing of an embodiment of a system 1 for cleaning fuel oil for a diesel engine. The system 1 comprises a centrifugal separator 2 arranged for separating at least clean oil phase and a sludge phase from fuel oil that is stored in bunker tank (or settling tank) 20. The fuel oil to be cleaned is supplied to the centrifugal separator 2 via piping 26 using liquid feed pump 21 of the system 1. The system further comprises a heating device 22 for heating the fuel oil to be cleaned. In this embodiment, the fuel oil is initially heated to about 98 °C by heating device 22.

The system also comprises a three-way valve 23 arranged upstream of the centrifugal separator 2 and arranged for directing the supply of the fuel oil to be cleaned to the centrifugal separator 1 or back to the bunker tank (or settling tank) 20, i.e. during circulation.

During the first mode of operation of the method of the present disclosure as illustrated in Fig. 1, the three-way valve 23 is set so as to direct the fuel oil to be cleaned to the centrifugal separator via the inlet pipe 8. The centrifugal separator is in this example arranged for continuously discharging a clean oil phase via a liquid light phase outlet 13 and a separated aqueous phase via liquid heavy phase outlet 14. During cleaning of the oil, a sludge phase is built up inside the centrifugal separator. After some time of separation, such sludge needs to be discharged from the centrifugal separator 1. The centrifugal separator is therefore also arranged for intermittently discharging the sludge phase.

During the second mode of operation, as illustrated in Fig. 2, the supply of fuel oil to be cleaned to the centrifugal separator 1 is stopped. This is performed by using the three-way valve to direct the fuel oil back to the bunker tank 20, i.e. the fuel oil is recirculated to the tank 22.

The intermittent discharge sequence comprises supplying displacement liquid, such as water, into the centrifugal separator via inlet 8. The displacement water originates from tank 30, from which displacement water may be supplied to the inlet pipe 8 via piping 31. Then, using an operating water module (OWM) 41, operating water is supplied to the centrifugal separator to open sludge outlets. Such outlets are opened for a fraction of a second to displace the sludge accumulated within the centrifuge bowl of the separator 1. During the intermittent discharge sequence, no clean oil or aqueous phase is discharged from outlets 13 or 14.

During this second mode of operation, when the fuel oil to be cleaned is recirculated back to tank 20, the temperature of the fuel oil is lowered to e.g. 60 °C or below, such as to 50 °C. This is performed by lowering the setpoint temperature of the heating device 22 or simply by turning the heating device 22 off. As an alternative or a complement, the flow rate of the fuel oil that is recirculated back to tank 20 is lowered by decreasing the setpoint flowrate of the liquid feed pump 21 or by turning the liquid feed pump off.

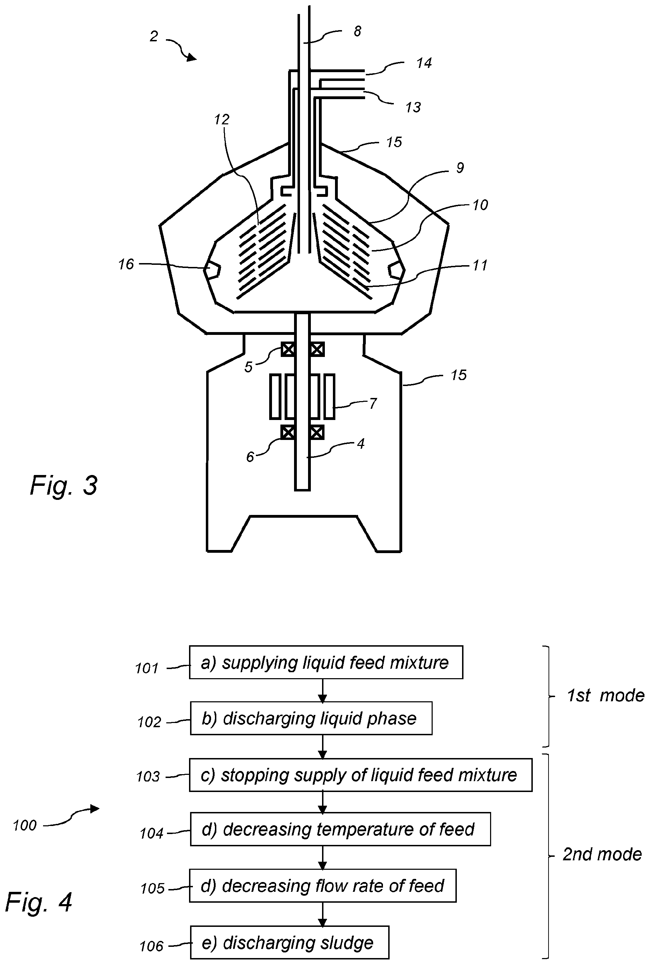

Consequently, and as illustrated by the method steps in Fig. 4, the method of the present disclosure comprises a first mode of operation, during which continuous cleaning of the fuel oil takes place, and a second mode of operation, when no fuel oil to be cleaned is supplied to the centrifugal separator 1 and during which energy is saved by decreasing the temperature and/or the flowrate of the recirculating fuel oil. Consequently, in this example, the first mode of operation comprises the steps of
a) supplying 101 fuel oil to be cleaned to the centrifugal separator 2 from a tank and heating the fuel oil to be cleaned to a first temperature of about 98 °C, and
b) discharging 102 a clean oil phase and an aqueous phase from the centrifugal separator 2.

The second mode of operation comprises
c) stopping 103 the supply of fuel oil to the centrifugal separator 2 and recirculating the fuel oil to be cleaned back to the tank;
d) decreasing 104 the temperature of the fuel oil that is recirculated to a second temperature of below 70 ° and/or decreasing 105 the flow rate of the liquid feed mixture; and
e) discharging 106 a separated sludge phase from the centrifugal separator 2.

Furthermore, after step e) has been performed, the system 1 may then again be operated in the first mode of operation until a further sludge discharge needs to be performed.

As illustrated in Figs 1 and 2, the system also comprises a control device 50 configured for regulating the supply, such as the flow rate, of fuel oil to the centrifugal separator 2 via the liquid feed pump 21, as indicated by dotted arrow "A". Further, the control device 21 is also configured for regulating the temperature of the fuel oil mixture using the heating device 22, as indicated by dotted line "B", and to regulate if the fuel oil is to be supplied to the separator 1 or recirculated back to the tank 22 using the three-way valve 23, as indicated by arrow "E". Thus, the control device 50 is configured for alternating between the first and second modes of operation according to the method of the present disclosure.

For the purpose of regulating, the control device 50 may comprise a processing unit, such as a central processing unit, which is configured to execute computer code instructions which for instance may be stored on a memory. The memory may thus form a (non-transitory) computer-readable medium for storing such computer code instructions. The processing unit may alternatively be in the form of a hardware component, such as an application specific integrated circuit, a field-programmable gate array or the like. The control device 50 may thus comprise a communication interface, such as a transmitter/receiver, via which it may receive data from the liquid feed pump 21 and the heating device 22 and further transmit data comprising operational requests to the liquid feed pump 21 and the heating device 22.

Thus, the present invention also provides a computer program comprising instructions to cause the control device to execute the steps a), c) and d) of the method of the present disclosure.

The control unit 50 may be the same control unit used for regulating the centrifugal separator 2 itself. Thus, the control device may be configured to control the speed of the centrifugal separator, as indicated by arrow "C". The control device may further be configured for initiating discharge of the sludge phase from the centrifugal separator 2. For this, the control device 50 may be configured to regulate the operating water module (OWM) 41, as indicated by arrow "D".

Consequently, the present invention also provides a computer program comprising instructions to cause the control device to execute the steps a), c) d) and e) of the method of the present disclosure.

The method and system 1 of the present invention is advantageous in that it reduces the overall power consumption of the system 1. As an example, during cleaning of fuel oil onboard a ship, the supply of fuel oil is usually heated from 50°C to 98°C. To run a common separator size that has a capacity of ~5m3/h the needed energy to heat the feed is ~130kW. The supply of fuel oil is almost always switched off to the separator when it is time for sludge discharge. In total, a sludge discharge sequence including supply of operating water, may take 150s. During these 150s the fuel oil is continuously running in recirculation. The present invention is thus to implement smart control of the heating, When going into recirculation, the temperature setpoint is changed to no heating at all, or only slight heating, such as to 60°C. Assuming one discharge every hour which is a common discharge interval, the total time spent in the second mode of operation per 24h is about 1 h. This means that the system could save up to 130 kWh per day, which is a substantial saving.

Fig. 3 illustrates and gives some further details of the centrifugal separator 2 that may be used in the system 1 as shown in Figs. 1 and 2.

The centrifugal separator 2 comprises a rotatable centrifuge bowl 9 that forms within itself a separation chamber 10 in which centrifugal separation of the fuel oil takes place during operation.

The separation chamber 10 is provided with a stack of frusto-conical separation discs 11 in order to achieve effective separation of the fuel oil. The stack of truncated conical separation discs 11 are examples of surface-enlarging inserts. These discs 11 are fitted centrally and coaxially with the centrifuge bowl and may comprise holes which form channels 12 for axial flow of liquid when the separation discs 11 are fitted in the centrifugal separator 2. The inlet pipe 8 forms a central duct, and is thus arranged for introducing the fuel oil for centrifugal separation in the separation chamber 10. The fuel oil is in this embodiment supplied from the top but also separators that are fed from the bottom may be used in the system 1.

The centrifugal separator 2 has extending from it a liquid light phase outlet 13 for a lower density component separated from the fuel oil, and a liquid heavy phase outlet 14 for a higher density component, or heavy phase, separated from the fuel oil. Liquid light phase outlet 13 could thus be for discharging a clean oil phase and liquid heavy phase outlet 14 could be for discharging a separated aqueous phase. The outlets 13 and 14 extend through the frame 15.

The centrifuge bowl 9 is further provided at its outer periphery with a set of radially sludge outlets 16 in the form of intermittently openable outlets for discharge of higher density component such as sludge or other solids in the oil. This material is thus discharged from a radially outer portion of the separation chamber 10 to the space round the centrifuge bowl 9. For example, a phase comprising catalyst fines could be discharged via outlets 16.

The centrifugal separator 2 is further provided with a drive motor 7 for rotating spindle 4 and the centrifuge bowl 9 attached to the spindle at desired speed. The spindle 4 and the centrifuge bowl 9 is suspended in the stationary frame 15 by upper 5 and lower 6 bearings.

During operation of the separator in Fig. 3, the centrifuge bowl 9 is caused to rotate by the drive motor 7. Via the inlet pipe 8, fuel oil to be separated is brought into the separation space 10. Depending on the density, different phases in the fuel oil is separated between the separation discs 11. Heavier component, such as a water phase and a sludge phase, move radially outwards between the separation discs, whereas the phase of lowest density, such as the clean oil phase, moves radially inwards between the separation discs and is forced through outlet 13 arranged at the radial innermost level in the separator. The liquid of higher density is instead forced out through outlet 14 that is at a radial distance that is larger than the radial level of outlet 13. Thus, during separation, an interphase between the liquid of lower density and the liquid of higher density is formed in the separation space 10. Solids, or sludge, accumulate at the periphery of the separation chamber 10 and is emptied intermittently from the separation space by the sludge outlets 16 being opened, whereupon sludge and a certain amount of fluid is discharged from the separation space by means of centrifugal force.

In certain applications, the separator 1 only contains a single liquid outlet, such as only liquid outlet 13, and the sludge outlets 16. This depends on the fuel oil that is to be processed.

The invention is not limited to the embodiment disclosed but may be varied and modified within the scope of the claims set out below. The invention is not limited to the type of separator as shown in the Figures. The term "centrifugal separator" also comprises centrifugal separators with a substantially horizontally oriented axis of rotation and separator having a single liquid outlet.

## Claims

1. A method (100) for operating a system (1) comprising a centrifugal separator (2) for separating at least one liquid phase and a sludge phase from a liquid feed mixture, said method (100) comprising alternating between a first and second mode of operation, wherein said first mode of operation comprises the steps of
a) supplying (101) said liquid feed mixture to be cleaned to said centrifugal separator (2), said liquid feed mixture having a first temperature;
b) discharging (102) at least one separated liquid phase from the centrifugal separator (2);
and said second mode of operation comprises the steps of
c) stopping (103) said supply of liquid feed mixture to the centrifugal separator (2);
and
d) decreasing (104) the temperature of the liquid feed mixture to a second temperature and/or decreasing (105) the flow rate of the liquid feed mixture.

2. A method (100) according to claim 1, wherein said second mode of operation further comprises the step
e) discharging (106) a separated sludge phase from the centrifugal separator (2).

3. A method (100) according to claim 1, wherein step a) comprises supplying (101) said liquid feed mixture from a tank (20) and step c) further comprises recirculating said liquid feed mixture to said tank (20).

4. A method (100) according to any previous claim, wherein step a) further comprises heating said liquid feed mixture to said first temperature using a heating device (22).

5. A method (100) according to claim 4, wherein step d) comprises turning said heating device (22) off.

6. A method (100) according to any previous claim, wherein step a) comprises supplying (101) said liquid feed mixture using a liquid feed pump (21).

7. A method (100) according to claim 6, wherein step d) comprises turning said liquid feed pump (21) off.

8. A method (100) according to any previous claim, wherein said liquid feed mixture is oil and said first temperature in step a) is at least 50 °C.

9. A method (100) according to claim 8, wherein step d) comprises decreasing the temperature of the oil to a second temperature that is at least 10 °C lower than said first temperature.

10. A method (100) according to claim 9, wherein said liquid feed mixture is fuel oil for a diesel engine, and wherein said first temperature is at least 97 °C, and wherein step d) comprises decreasing the oil to a temperature that is lower than 80 °C, such as lower than 70 °C.

11. A system (1) for separating at least one liquid phase and a sludge phase from a liquid feed mixture, said system (1) comprising
- a centrifugal separator (2) arranged for separating at least one liquid phase and a sludge phase from said liquid feed mixture, and further arranged for continuously discharging said at least one separated liquid phase and intermittently discharging said sludge phase,
- a liquid feed pump (21) for supplying said liquid feed mixture to said centrifugal separator (2),
- a heating device (22) for heating said liquid feed mixture, and
- a control device (50) configured for regulating the supply of liquid feed mixture to said centrifugal separator (2) via said liquid feed pump (21) and/or for regulating the temperature of said liquid feed mixture using said heating device (22), and further configured for initiating discharge of said sludge phase from said centrifugal separator (2); and further
wherein said control device (50) is configured for alternating between said first and second modes of operation according to the method (100) of any one of claims 1-10.

12. A system (1) according to claim 11, wherein said control device (50) is configured for performing steps a), c) and d) of the method (100) according to any one of claims 1-10.

13. A system (1) according to claim 12, wherein said control device (50) is further configured for initiating step e) of discharging a separated sludge phase from the centrifugal separator (2).

14. A system (1) according to any one of claims 11-13, further comprising a tank (20) for storing said liquid feed mixture to be separated, and wherein said liquid feed pump (21) is arranged for supplying said liquid feed mixture to said centrifugal separator (2) from said tank (20).

15. A system (1) according to claim 14, further comprising a valve member (23) arranged upstream of the centrifugal separator (2) and arranged for directing the supply of the liquid feed mixture to the centrifugal separator (1) during the first mode of operation and directing the supply of the liquid feed mixture back to said tank (20) during the second mode of operation.
